# EUROPÄISCHE PATENTSCHRIFT

(11) **EP 2 567 246 B1**
(45) Veröffentlichungstag und Bekanntmachung des Hinweises auf die Patenterteilung: **17.11.2021**
(21) Anmeldenummer: 11714738.9
(22) Anmeldetag: 11.04.2011
(51) Int. Cl.: A47L 15/42, D06F 58/26, D06F 39/04, H01H 47/00, G05B 9/02, F24H 9/20

(54) **HAUSHALTSGERÄT UND VERFAHREN ZUM ÜBERPRÜFEN EINES ELEKTRISCHEN VERBRAUCHERS EINES HAUSHALTSGERÄTES**
DOMESTIC APPLIANCE AND METHOD FOR CHECKING AN ELECTRICAL LOAD OF A DOMESTIC APPLIANCE
APPAREIL MÉNAGER ET PROCÉDÉ DE CONTRÔLE D'UNE CHARGE ÉLECTRIQUE D'UN APPAREIL MÉNAGER

(30) Priorität: 04.05.2010 DE 102010028533
(43) Veröffentlichungstag der Anmeldung: 13.03.2013
(73) Patentinhaber: BSH Hausgeräte GmbH, 81739 München (DE)
(72) Erfinder: WECKER, Markus, 89355 Gundremmingen (DE); DUSCHER, Christian, 93152 Nittendorf (DE); HOCHHAUSEN, Ralf, 93138 Lappersdorf (DE)
(86) Internationale Anmeldenummer: PCT/EP2011/055580
(87) Internationale Veröffentlichungsnummer: WO 2011/138129

(56) Entgegenhaltungen:
- EP-A1- 2 063 278
- EP-A1- 2 353 485
- DE-A1- 19 755 089
- DE-A1-102008 011 495

## Beschreibung

Die Erfindung betrifft ein Haushaltsgerät, insbesondere Geschirrspülmaschine, Waschmaschine, oder Wäschetrocknermaschine, mit einer Steuervorrichtung, mindestens einer Serienschaltung, die einen mittels der Steuervorrichtung steuerbaren ersten Schalter, einen mittels der Steuervorrichtung steuerbaren zweiten Schalter und einen zwischen den beiden Schaltern angeordneten elektrischen Verbraucher aufweist, der mittels der beiden Schalter allpolig von einem eine Versorgungsspannung für das Haushaltsgerät bereitstellenden, elektrischen Versorgungsnetz trennbar ist, und mit einer zum Überprüfen der Funktionstüchtigkeit des elektrischen Verbrauchers vorgesehenen Schaltungsanordnung.

Die DE 10 2008 011 495 A1 offenbart ein Haushaltsgerät mit einem Steuergerät zur Funktionssteuerung des Haushaltsgerätes und einem Leistungsteil, das elektrische und mit Netzwechselspannung betriebene Verbraucher umfasst. Diesen sind mittels des Steuergerätes schaltbare Schaltmittel des Leistungsteils zugeordnet, die jeweils in Abhängigkeit von ihren Schaltzuständen die Verbraucher mit einem Pol der Netzwechselspannung verbinden oder von dem Pol trennen können. Das Leistungsteil umfasst ferner wenigstens ein mittels des Steuergerätes ansteuerbares weiteres Schaltmittel, das in Abhängigkeit seines Schaltzustandes alle Verbraucher mit dem anderen Pol der Netzwechselspannung verbindet oder trennt.

Die nachveröffentlichte EP 2 353 485 A1 offenbart eine Einheit zum Ansteuern einer Last eines Haushaltsgerätes.

Aufgabe der Erfindung ist es, ein verbessertes Haushaltsgerät mit einem elektrischen Verbraucher anzugeben, das eingerichtet ist, selbständig den Zustand des Verbrauchers zu überprüfen.

Eine weitere Aufgabe der Erfindung ist es, ein verbessertes Verfahren zum Überprüfen des Zustands eines elektrischen Verbrauchers eines Haushaltsgerätes anzugeben.

Gemäß der Erfindung wird diese Aufgabe durch ein Haushaltsgerät nach Anspruch 1 gelöst.

Das erfindungsgemäße Haushaltsgerät ist insbesondere eine Geschirrspülmaschine, eine Waschmaschine oder eine Wäschetrocknermaschine. Der elektrische Verbraucher kann insbesondere eine Heizung z.B. zum Erwärmen von Wasser oder auch von Luft sein. Der Verbraucher kann insbesondere als ein Rohrheizungskörper oder als eine sogenannte Dickschichtheizung ausgebildet sein.

Das erfindungsgemäße Haushaltsgerät umfasst demnach einen elektrischen Verbraucher, der allpolig mittels der beiden Schalter vom Versorgungsnetz getrennt werden kann. Sind die beiden Schalter geschlossen, dann ist der elektrische Verbraucher zumindest indirekt mit dem Versorgungsnetz verbunden, so dass z.B. die Versorgungsspannung des Versorgungsnetzes am elektrischen Verbraucher anliegt. Je nach Ort der Aufstellung handelt es sich beispielsweise bei der Versorgungsspannung um eine Wechselspannung z.B. mit einem nominalen Spannungswert von 230V.

Die Schalter sind von der Steuervorrichtung steuerbar, so dass die Steuervorrichtung den elektrischen Verbraucher bei Bedarf durch Schließen der Schalter einschalten und durch öffnen der Schalter ausschalten kann.

Der elektrische Verbraucher kann defekt sein, was mittels der Schaltungsanordnung ermittelt werden kann. Insbesondere kann der elektrische Verbraucher einen Erdschluss, d.h. eine ungewollte Verbindung mit Masse aufweisen. In diesem Fall ist der elektrische Verbraucher z.B. mit einem Gehäuse des Haushaltsgerätes oder mit einem Neutralleiter des Haushaltsgerätes verbunden. Ein weiterer Fehlerfall kann dadurch auftreten, dass der elektrische Verbraucher elektrisch unterbrochen ist. Im Fall einer elektrischen Heizwendel oder Heizleiterbahn ist dies z.B. dann gegeben, wenn diese durchtrennt ist.

Um einen Defekt des elektrischen Verbrauchers insbesondere in automatisierter Weise zu erkennen, um dann beispielsweise den elektrischen Verbraucher nicht mehr zuzuschalten, ist die Schaltungsanordnung vorgesehen, die erfindungsgemäß den Spannungsteiler aufweist. Dieser umfasst wiederum die beiden Widerstände. Diese können jeweils aus einem einzigen physikalischen Widerstand bestehen oder auch mehrere, insbesondere in Serie geschaltete Widerstände umfassen. Der Spannungsteiler ist erfindungsgemäß parallel zu der Serienschaltung aus den beiden Schaltern und dem elektrischen Verbraucher geschaltet. Außerdem ist einer der Widerstände, der erste Widerstand, parallel zum ersten Schalter geschaltet, so dass der erste Schalter in seinem geschlossenen Zustand den ersten Widerstand im Wesentlichen überbrückt.

Um die Funktionstüchtigkeit des elektrischen Verbrauchers zu überprüfen, wird nun erfindungsgemäß die elektrische Spannung des Spannungsteilers insbesondere für verschiedene Schaltzustände der Schalter ausgewertet, woraus es möglich ist, einen Rückschluss über den Zustand des elektrischen Verbrauchers zu erhalten. Unter Auswerten der elektrischen Spannung des Spannungsteilers kann auch verstanden werden, dass eine der Spannung des Spannungsteilers zugeordnete Spannung ausgewertet wird. Bei dieser Spannung handelt es sich insbesondere um eine elektrische Spannung, die proportional zur Spannung des Spannungsteilers ist, jedoch kleiner ist als diese, um beispielsweise in geeigneter Weise von der Steuervorrichtung ausgewertet zu werden.

Die Schalter können vorzugsweise als von der Steuervorrichtung steuerbare Relais ausgebildet sein. Mittels Relais können in relativ einfacher Weise die steuerbaren Schalter realisiert werden.

Die Spannung des Spannungsteilers liegt insbesondere an einem ersten Knoten an, der mit den beiden Widerständen des Spannungsteilers und dem ersten Schalter verbunden ist.

Der Spannungsteiler ist vorzugsweise zwischen einem Außenleiter und einem Neutralleiter des Haushaltsgerätes geschaltet.

Um die Funktionsweise der erfindungsgemäßen Schaltungsanordnung zu verbessern, sind nach einer vorteilhaften Variante des erfindungsgemäßen Haushaltsgerätes die Widerstandwerte der beiden Widerstände des Spannungsteilers oder ist zumindest der Widerstandswert des zweiten Widerstands wesentlich größer als der Widerstandswert des elektrischen Verbrauchers.

Vorzugsweise ist das Spannungsteilungsverhältnis des Spannungsteilers 0,5 oder beträgt zumindest annähernd 0,5.

Um einen für die Steuervorrichtung geeigneten Spannungswert für die Auswertung zu erhalten, ist nach einer vorteilhaften Ausführungsform des erfindungsgemäßen Haushaltsgerätes der zweite Widerstand als eine Serienschaltung von wenigstens zwei Widerständen ausgebildet, die über einen zweiten Koten verbunden sind. Aufgrund dieser beiden Widerstände wird die Spannung des Spannungsteilers, also die am ersten Knoten anliegende Spannung, entsprechend dem Verhältnis der beiden Widerstandswerte der beiden Widerstände des zweiten Widerstands geteilt, wodurch der Steuervorrichtung eine kleinere Spannung als die Spannung des Spannungsteilers zur Verfügung steht. Diese Spannung ist jedoch im Wesentlichen proportional zur Spannung des Spannungsteilers.

Um einen Erdschluss des elektrischen Verbrauchers zu erkennen, ist beim erfindungsgemäßen Haushaltsgerät die Steuervorrichtung eingerichtet, aufgrund einer Auswertung der elektrischen Spannung des Spannungsteilers oder der dieser elektrischen Spannung zugeordneten elektrischen Spannung bei geöffneten Schaltern den Erdschluss des elektrischen Verbrauchers zu erkennen. Somit wird im Wesentlichen die Spannung des Spannungsteilers bei geöffneten Schaltern ausgewertet. Ist nämlich der elektrische Verbraucher in Ordnung, dann ergibt sich bei geöffneten Schaltern die Spannung des Spannungsteilers aus dem Spannungsteilerverhältnis und des Spannungswertes der Versorgungsspannung.

Nach einer vorteilhaften Variante des erfindungsgemäßen Haushaltsgerätes wird bei geöffneten Schaltern ein Erdschluss des elektrischen Verbrauchers erkannt, wenn die Spannung des Spannungsteilers wesentlich vom Spannungswert abweicht, der sich aufgrund des Spannungsteilungsverhältnisses des Spannungsteilers und des Spannungswerts der vom Versorgungsnetz bereit gestellten und für den Berieb des Haushaltsgerätes vorgesehen Versorgungsspannung ergibt.

Ist z.B. der zweite Schalter mit dem Neutralleiter des Haushaltsgerätes verbunden, dann überbrückt der elektrische Verbraucher bei einem Erdschluss den zweiten Widerstand niederohmig. Je nach Anschluss des Haushaltsgerätes am Versorgungsnetz ist deshalb die Spannung am Spannungsteiler entweder annähernd 0V oder entspricht der Versorgungsspannung. Somit liegt also kein Erdschluss vor, wenn die gemessene Spannung des Spannungsteilers in etwa die Spannung ist, die sich aufgrund des Spannungsteilungsverhältnisses des Spannungsteilers und des Spannungswerts der vom Versorgungsnetz bereitgestellten und für den Berieb des Haushaltsgerätes vorgesehen Versorgungsspannung ergibt. Aus diesem Grund ist es vorteilhaft, wenn das Spannungsteilerverhältnis zumindest annähend 0,5 ist.

Um eine Unterbrechung des elektrischen Verbrauchers zu ermitteln, ist beim erfindungsgemäßen Haushaltsgerät die Steuervorrichtung eingerichtet, aufgrund einer Auswertung der elektrischen Spannung des Spannungsteilers oder der dieser elektrischen Spannung zugeordneten elektrischen Spannung bei geöffnetem ersten Schalter und bei geschlossenem zweiten Schalter eine Unterbrechung des elektrischen Verbrauchers zu erkennen. Somit wird im Wesentlichen die Spannung des Spannungsteilers bei geöffneten ersten und geschlossenem zweiten Schalter ausgewertet. Ist nämlich der elektrische Verbraucher in Ordnung, dann ist der elektrische Verbraucher parallel zum zweiten Widerstandswert geschaltet, weshalb sich der Spannungswert der Spannung des Spannungsteilers von dem Spannungswert unterscheidet, der sich aufgrund der Versorgungsspannung und dem Spannungswert der Versorgungsspannung ergibt. Weist der elektrische Verbraucher dagegen eine Unterbrechung auf, dann entspricht auch bei geschlossenem zweiten Schalter die Spannung am Spannungsteiler einer Spannung, die sich aufgrund der Versorgungsspannung und dem Spannungsteilerverhältnis ergibt.

Gemäß einer vorteilhaften Variante des erfindungsgemäßen Haushaltsgerätes ist die Steuervorrichtung eingerichtet, bei geöffnetem ersten Schalter und bei geschlossenem zweiten Schalter dann eine Unterbrechung des elektrischen Verbrauchers zu erkennen, wenn die Spannung des Spannungsteilers zumindest in etwa den Spannungswert aufweist, der sich aufgrund des Spannungsteilungsverhältnisses des Spannungsteilers und des Spannungswerts der vom Versorgungsnetz bereitgestellten und für den Berieb des Haushaltsgerätes vorgesehen Versorgungsspannung ergibt.

Beim erfindungsgemäßen Haushaltsgerätes ist dem zweiten Schalter eine eigene Funktionsüberprüfungsvorrichtung zugeordnet. Die Funktionsüberprüfungsvorrichtung weist insbesondere eine elektrische Spannungsquelle und einen zwischen dem zweiten Schalter und der Spannungsquelle geschalteten Widerstand aufweist, die nur im geöffneten Zustand des zweiten Schalters über den zweiten Schalter und diesen Widerstand mit einem Neutralleiter des Haushaltsgerätes verbunden ist. Die Steuervorrichtung ist eingerichtet, aufgrund der am Widerstand der Funktionsüberprüfungsvorrichtung anliegenden elektrischen Spannung zu erkennen, ob der zweite Schalter von seinem geöffneten Zustand in seinen geschlossenen Zustand umgeschaltet ist.

Die Erfindung betrifft auch ein Verfahren nach Anspruch 7 zum Uberprüfen der Funktionstüchtigkeit eines elektrischen Verbrauchers eines Haushaltsgerätes.

Die zeitliche Uberprüfungsabfolge hat den Vorteil, dass bei der zuerst durchgeführten, sicherheitstechnisch relevanten Überprüfung des Verbrauchers auf einen etwaigen Erdschluss hin beide Schalter offen sind, und erst zur Überprüfung des Verbrauchers auf eine potentielle Unterbrechung hin der zweite Schalter, insbesondere Arbeitsschalter, geschlossen wird, während der erste Schalter, insbesondere Sicherheitsschalter, offen bleibt. Da der erste Schalter sowohl während der Erdschlussüberprüfung als auch noch während dieser Unterbrechungsprüfung offen bleibt, ist der Leitungszweig mit dem Verbraucher von der Netzspannung durch den offenen ersten Schalter abgetrennt, was sicherungstechnisch vorteilhaft ist.

Je nach Ausführungsform der Erfindung wird eine Masseschlusserkennung und Wiedereinschaltschutz bei einer defekten Heizung bereit gestellt.

Gegebenenfalls ergibt sich eine Absicherung einer Heizung, z.B. Luftheizung oder Wasserheizung im Gerät gegen den unsachgemäßen Betrieb. Dies wären z. B. Sichern gegen Wiedereinschalten, wenn die Heizung (allgemein: elektrischer Verbraucher) defekt ist, und Erkennung Masseschluss bzw. Erdschluss ohne Einschaltung der Heizung bzw. des elektrischen Verbrauchers.

Vorteile der Erfindung können z.B. eine Erhöhung der elektrischen Sicherheit des Gerätes oder ein Kostenvorteil sein, da Bauteile eingespart werden können.

Sonstige Weiterbildungen der Erfindung sind in den abhängigen Ansprüchen wiedergegeben. Die Erfindung und ihre Weiterbildung sowie deren Vorteile werden nachfolgend anhand von Zeichnungen erläutert. Es zeigen jeweils schematisch:
- Fig. 1.: eine Haushaltsgeschirrspülmaschine, und
- Fig. 2: einen elektrischen Prinzipschaltplan elektronischer und/oder elektrischer Komponenten der Haushaltgeschirrspülmaschine.

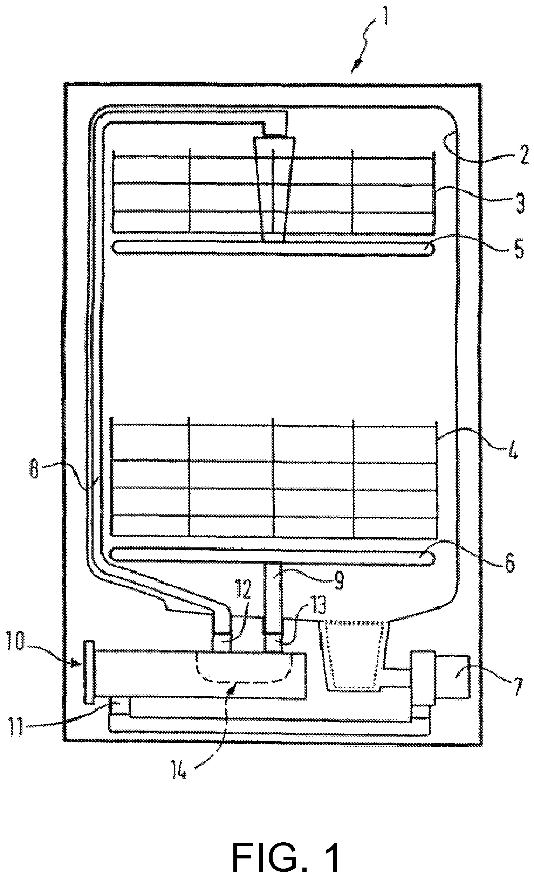

Elemente mit gleicher Funktion und Wirkungsweise sind in den Figuren 1 bis 4 jeweils mit denselben Bezugszeichen versehen.

Die Fig. 1 zeigt in geschnittener Darstellung eine Haushaltsgeschirrspülmaschine 1 als Beispiel eines Haushaltsgerätes.

Die Haushaltsgeschirrspülmaschine 1 weist einen Spülbehälter 2 zur Aufnahme von Spülgut auf, das beispielsweise in übereinander angeordnete, als Geschirrkörbe 3 ausgebildete Geschirrbehälter eingeordnet werden kann. Der Spülbehälter 2 kann mittels einer nicht näher gezeigten, bezüglich einer horizontalen Achse verschwenkbaren Tür verschlossen werden, wie dies üblich ist. Bei geöffneter Tür können die beiden Geschirrkörbe 3 aus dem Spülbehälter 2 gezogen werden, um ein Be- und Entladen der Geschirrkörbe 3 zumindest zu erleichtern.

In dem Spülbehälter 2 sind beispielsweise zumindest zwei Sprühvorrichtungen zum Beaufschlagen des Spülguts mit einer Flüssigkeit angeordnet, die üblicherweise als Spülflotte bezeichnet wird. Im Falle des vorliegenden Ausführungsbeispiels sind die Sprühvorrichtungen als obere und untere, rotierbare Sprüharme 5, 6 ausgebildet. Die Flüssigkeit kann von einer Umwälzpumpe 7 über eine erste Flüssigkeitszuleitung 8 zum oberen Sprüharm 5 und über eine zweite Flüssigkeitszuleitung 9 zum unteren Sprüharm 6 gefördert werden. Die Umwälzpumpe 7 wird z.B. mittels eines nicht näher dargestellten elektrischen Antriebs, insbesondere mittels dessen elektrischen Motors, angetrieben.

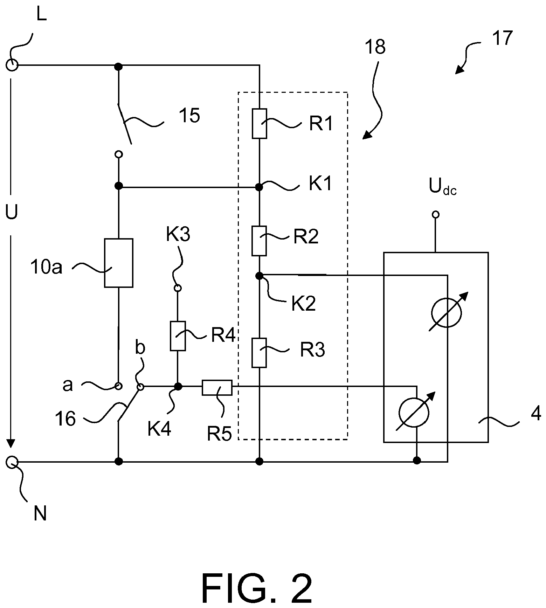

Im Falle des vorliegenden Ausführungsbeispiels wird die Flüssigkeit zumindest in einem Teilprogrammschritt eines mittels einer in der Fig. 2 gezeigten Steuervorrichtung 4 gesteuerten Spülprogramms der Haushaltsgeschirrspülmaschine 1 durch einen Durchlauferhitzer 10 erwärmt, der mit einem Eingangsstutzen 11 an die Umwälzpumpe 7 und mit Ausgangsstutzen 12, 13 an die Flüssigkeitszuleitungen 8, 9 angeschlossen ist. Die Anzahl der Ausgangsstutzen 12, 13 entspricht der Anzahl der Sprüharme 5, 6 oder gleichzeitig betriebener Gruppen von Sprüharmen 5, 6. Die von der Umwälzpumpe 7 geförderte Flüssigkeit wird demnach im Falle des vorliegenden Ausführungsbeispiels zum Eingangsstutzen 11 des Durchlauferhitzers 10 und von dessen Ausgangsstutzen 12, 13 über die Flüssigkeitszuleitungen 8, 9 zu den Sprüharmen 5, 6 geleitet.

Die Haushaltsgeschirrspülmaschine 1 weist ferner eine Wasserweiche 14 auf, die z.B. im Durchlauferhitzer 10 angeordnet oder an diesem angeformt ist. Die Wasserweiche 14 kann z.B. aber auch in der Haushaltsgeschirrspülmaschine 1 für sich allein angeordnet oder unmittelbar an die Umwälzpumpe 7 angeschlossen sein.

Mittels der Wasserweiche 14 können die Sprüharme 5, 6 jeweils abwechselnd und/oder ständig mit der Flüssigkeit beschickt werden, was durch Öffnen eines Flüssigkeitsauslasses und durch Verschließen eines anderen Flüssigkeitsauslasses der Wasserweiche 14 erzielt wird.

Die Fig. 2 zeigt einen elektrischen Prinzipschaltplan einer elektrischen Schaltung 17 der Haushaltsgeschirrspülmaschine 1, die u.A. die Steuervorrichtung 4 zeigt und vorgesehen ist, die Funktionstüchtigkeit eines elektrischen Verbrauchers 10a der Haushaltsgeschirrspülmaschine 1 zu überprüfen.

Der elektrische Verbraucher 10a, der z.B. der Durchlauferhitzer 10 sein kann, kann mittels eines ersten Schalters 15 und eines zweiten Schalters 16 der Haushaltsgeschirrspülmaschine 1 allpolig von einem Versorgungsnetz getrennt werden. Die beiden Schalter 15, 16 können von der Steuervorrichtung 4 gesteuert werden und sind z.B. als Relais ausgeführt.

Der erste Schalter 15 ist im Falle des vorliegenden Ausführungsbeispiels mit dem Außenleiter L der Haushaltsgeschirrspülmaschine 1 und der zweite Schalter 16 ist mit dem Neutralleiter N der Haushaltsgeschirrspülmaschine 1 verbunden. Sind die beiden Schalter 15, 16 geschlossen, d.h. verbindet der erste Schalter 15 den elektrischen Verbraucher 10a mit dem Außenleiter L und der zweiten Schalter 16 den elektrischen Verbraucher 10a mit dem Neutralleiter N der Haushaltsgeschirrspülmaschine 1, dann liegt am elektrischen Verbraucher 10a im Wesentlichen die Versorgungsspannung U an, wenn der Außenleiter L der Haushaltsgeschirrspülmaschine 1 mit dem Außenleiter des Versorgungsnetzes verbunden ist. Die Versorgungsspannung U ist insbesondere eine Wechselspannung mit einem nominalen Spannungswert von z.B. 230 V.

Die elektrische Schaltung 17 weist ferner einen Spannungsteiler 18 auf, der parallel zur Serienschaltung aus den beiden Schaltern 15, 16 und dem elektrischen Verbraucher 10a geschaltet ist. Der Spannungsteiler 18 ist insbesondere zwischen dem Außenleiter L und dem Neutralleiter N der Haushaltsgeschirrspülmaschine 1 geschaltet. Der Spannungsteiler 18 weist einen ersten Widerstand R1 auf, der parallel zum ersten Schalter 15 geschaltet ist. Im Falle des vorliegenden Ausführungsbeispiels weist der erste Widerstand R1 einen Widerstandswert von vorzugsweise 220 kΩ auf. Ist der erste Schalter 15 geschlossen, so schließt dieser somit im Wesentlichen den ersten Widerstand R1 kurz.

Der Spannungsteiler 18 weist im Falle des vorliegenden Ausführungsbeispiels eine Serienschaltung aus einem zweiten Widerstand R2 und einem dritten Widerstand R3 auf. Dabei ist diese Serienschaltung aus zweitem und drittem Widerstand in Serie zum ersten Widerstand R1 geschaltet. Der zweite Widerstand R2 ist über einen ersten Knoten K1 mit dem ersten Widerstand R1 und dem ersten Schalter 15 verbunden. Er weist z.B. einen Widerstandswert von etwa der Größe des Widerstandswertes des ersten Widerstands R1, hier etwa von 220 kΩ auf. Der dritte Widerstand R3 ist über einen zweiten Knoten K2 mit dem zweiten Widerstand R2 verbunden. Er weist im Falle des vorliegenden Ausführungsbeispiels einen Widerstandswert auf, der wesentlich kleiner als die Widerstandswerte des ersten Widerstands R1 und des zweiten Widerstandes R2 sind. Der Widerstandwert des dritten Widerstandes R3 ist beispielsweise 10 kQ. Somit liegt am ersten Knoten K1 bei geöffneten Schaltern 15, 16 in etwa die halbe Versorgungsspannung U an. Am ersten Knoten K1 liegt die elektrische Spannung des Spannungsteilers 18 an.

Im Falle des vorliegenden Ausführungsbeispiels ist der zweite Knoten K2 mit der Steuerungsvorrichtung 4 verbunden, die z.B. einen Mikrokontroller oder einen Mikroprozessor umfasst. Die Steuervorrichtung 4 wird z.B. mit einer Gleichspannung U_{dc} versorgt, die z.B. einen Wert von 5V aufweist. Die Steuervorrichtung 4 ist im Falle des vorliegenden Ausführungsbeispiels eingerichtet, die elektrische Spannung am zweiten Knoten K2 bezogen auf den Neutralleiter N zu ermitteln, die der Spannung des Spannungsteilers 18, also der am ersten Knoten K1 anliegenden Spannung zugeordnet ist.

Im Falle des vorliegenden Ausführungsbeispiels kann der zweite Schalter 16 zwischen einer Schalterstellung a und einer Schalterstellung b geschaltet werden. Befindet sich der zweite Schalter 16 in seiner Schalterstellung a, dann ist der zweite Schalter 16 geschlossen und der elektrische Verbraucher 10a über den zweiten Schalter 16 mit dem Neutralleiter N der Haushaltsgeschirrspülmaschine 1 verbunden. Befindet sich der zweite Schalter 16 in seiner Schaltstellung b, dann ist der zweite Schalter 16 geöffnet und der zweite Schalter 16 unterbricht die elektrische Verbindung zwischen dem elektrischen Verbraucher 10a und dem Neutralleiter N der Haushaltsageschirrspülmaschine 1.

In seiner Schalterstellung b verbindet der zweite Schalter 16 im Falle des vorliegenden Ausführungsbeispiels einen dritten Knoten K3 über einen vierten Widerstand R4 mit dem Neutralleiter N der Haushaltsageschirrspülmaschine 1. Der vierte Widerstand R4 weist beispielsweise einen Widerstandswert von 5 kΩ auf. An dem dritten Knoten K3 liegt z.B. die Gleichspannung U_{dc} von beispielsweise 5 V an.

Im Falle des vorliegenden Ausführungsbeispiels weist die elektrische Schaltung 17 noch einen fünften Widerstand R5 auf, der mit dem vierten Widerstand R4 und der Steuervorrichtung 4 verbunden ist.

Die Steuervorrichtung 4 ist wiederum in nicht dargestellter Weise mit den beiden Schaltern 15, 16 verbunden und kann diese schließen und öffnen, um beispielsweise den elektrischen Verbraucher 10a in gewünschter Weise mit der Versorgungsspannung U zu beaufschlagen oder von dieser zu trennen.

Im Falle des vorliegenden Ausführungsbeispiels ist der Spannungsteiler 18 dafür vorgesehen, die Funktionstüchtigkeit des elektrischen Verbrauchers 10a mittels der Steuervorrichtung 4 automatisch zu überprüfen. Der vierte Widerstand R4 und der fünfte Widerstand R5 sind vorgesehen, den zweiten Schalter 16 zu überprüfen. Der zweite Schalter 16 ist im Falle des vorliegenden Ausführungsbeispiels vorzugsweise als Arbeits-Relais und der erste Schalter 15 vorzugsweise als Sicherheits-Relais ausgeführt.

Im Falle des vorliegenden Ausführungsbeispiels ist die Steuervorrichtung 4 derart eingerichtet, dass sie folgendermaßen die Funktion des elektrischen Verbrauchers 10a überprüft, um insbesondere zu erkennen, ob dieser eine fehlerhafte Verbindung mit Masse der Haushaltsageschirrspülmaschine 1, d.h. einen Erdschluss aufweist, oder unterbrochen ist:
Zunächst sind beide Schalter 15, 16 geöffnet bzw. werden von der Steuervorrichtung 4 geöffnet. Ist der elektrische Verbraucher 10a in Ordnung, dann liegt am Spannungsteiler 18, d.h. am ersten Knoten K1 in etwa die halbe Versorgungsspannung U, allgemein eine elektrische Spannung an, die sich aus der Versorgungsspannung U und dem Spannungsteilerverhältnis des Spannungsteilers ergibt.

Weist der elektrische Verbraucher 10a einen Erdschluss auf, dann werden der zweite und dritte Widerstand R2, R3 im Wesentlichen kurzgeschlossen, wodurch die am Spannungsteiler 18, d.h. am ersten Knoten K1 anliegende elektrische Spannung auf etwa 0V sinkt, wenn der Außenleiter L der Haushaltsageschirrspülmaschine 1 mit dem Außenleiter des Versorgungsnetzes verbunden ist. Demnach misst in diesem Fall die Steuervorrichtung 4 eine elektrische Spannung am zweiten Konten K2, die wesentlich kleiner als diejenige Spannung ist, die am zweiten Knoten K2 anliegt, wenn der elektrische Verbraucher 10a in Ordnung ist. In diesem Fall schaltet die Steuervorrichtung 4 den elektrischen Verbraucher 10a nicht mittels der Schalter 15, 16 ein, d.h. der elektrische Verbraucher 10a bleibt allpolig vom Versorgungsnetz getrennt.

Misst die Steuervorrichtung 4 eine elektrische Spannung am zweiten Knoten K2, die in etwa der halben Versorgungsspannung U am ersten Knoten K1 zugeordnet ist (bzw. allgemein eine elektrische Spannung, die einer elektrischen Spannung zugeordnet ist, die sich aufgrund des Spannungsteilungsverhältnisses des Spannungsteilers 18 und der angelegten Versorgungsspannung U bildet), dann schaltet die Steuervorrichtung 4 den zweiten Schalter 16 ein.

Im Falle des vorliegenden Ausführungsbeispiels ermöglichen der vierte Widerstand R4 und der fünfte Widerstand R5 in Verbindung mit der am dritten Knoten K3 anliegenden Gleichspannung U_{dc} eine Funktionskontrolle des zweiten Schalters 16. Solange der zweite Schalter 16 geöffnet ist, sich also in der Schaltstellung b befindet, misst die Steuervorrichtung 4 am fünften Widerstand R5 im Wesentlich einen Spannungswert von 0V, der sich auf den Spannungswert der Gleichspannung U_{dc} von 5V im vorliegenden Ausführungsbeispiels erhöht, wenn der zweite Schalter 16 geschlossen wird, also sich im Schaltzustand a befindet. Ist dies nicht der Fall, d.h. erhöht sich nicht die Spannung am fünften Widerstand R5, dann ist der zweite Schalter 16 defekt, weil er z.B. mit seinem Kontakt in Offenstellung zum Gegenkontakt in der Leitung mit der Serienschaltung aus erstem Schalter, Verbraucher und zweiten Schalter ist.

Ist der zweite Schalter 16 in Ordnung und geschlossen, und ist der elektrische Verbraucher 10a in Ordnung, dann sinkt die Spannung des Spannungsteilers 18, d.h. die am ersten Knoten K1 anliegende Spannung auf etwa 0V, wenn der ohmsche Widerstand des elektrischen Verbrauchers 10a wesentlich kleiner ist als die Widerstandswerte des zweiten und dritten Widerstandes R2, R3, was hier der Fall ist, und wenn der Neutralleiter N der Haushaltsageschirrspülmaschine 1 mit dem Neutralleiter des Versorgungsnetzes verbunden ist. Dann schließt die Steuervorrichtung 4 den ersten Schalter 15, hier Sicherheitsschalter, wodurch der elektrische Verbraucher 10a am Versorgungsnetz anliegt.

Ist der elektrische Verbraucher 10a hochohmig, d.h. insbesondere unterbrochen und deshalb defekt, dann misst die Steuervorrichtung 4 eine elektrische Spannung am zweiten Knoten K2, die einer elektrischen Spannung zugeordnet ist, die sich aufgrund des Spannungsteilungsverhältnisses des Spannungsteilers 18 und der angelegten Versorgungsspannung U bildet. In diesem Fall lässt die Steuervorrichtung 4 den ersten Schalter 15 geöffnet.

Je nach Ausführungsform können sich am ersten Knoten K1 folgende Zustände ergeben:
Zustand 0: Spannung des Spannungsteilers 18 ist ca. 0V.
Zustand 1: Spannung des Spannungsteilers 18 entspricht in etwa der halben Netzspannung bzw. der halben Versorgungsspannung U, wenn die Widerstandswerte des ersten Widerstandes R1 und die Kombination aus dem zweiten und dritten Widerstand R2, R3 in etwa gleich groß sind.
Zustand 2: Spannung des Spannungsteilers 18 entspricht in etwa der Netzspannung bzw. der Versorgungsspannung U.

Ein Masseschluss bzw. ein Erdschluss der Heizung bzw. allgemein des elektrischen Verbrauchers 10a kann z.B. folgendermaßen erkannt werden:
Sind beide Schalter 15, 16, die insbesondere als Relais ausgebildet sind, geöffnet, dann erkennt die Steuervorrichtung 4 den Zustand 1 (Eingang hochohmig gegen Außenleiter L und Neutralleiter N).

Besitzt eine Heizung bzw. der elektrische Verbraucher 10a einen Masseschluss bzw. Erdschluss, dann wird der Eingang der Steuervorrichtung 4 auf den Zustand 0 gesetzt, weil der hochohmige Eingang von ca. halbe Netzspannung/ Versorgungsspannung U auf annähernd 0V gezogen wird. Dieser Fall tritt auf, wenn kein Relais bzw. keiner der Schalter 15, 16 eingeschaltet bzw. geschlossen ist. Der elektrische Verbraucher 10a bzw. die Heizung wird nicht mehr in Betrieb genommen und bleibt allpolig vom Netz getrennt.

Wiedereinschaltschutz bei defekter Heizung/ elektrischer Verbraucher (hochohmig):
Im Falle des vorliegenden Ausführungsbeispiels weist der zweite Schalter 16 eine eigene Funktionskontrolle auf. Benutzt man jetzt die Einschaltsequenz beim Einschalten der Heizung/ des elektrischen Verbrauchers 10a zweiter Schalter 16 "ein" (durch eine Abfrage des Eingangs der Steuervorrichtung 4; dann kann ermittelt werden, ob der zweite Schalter geschaltet hat).

Wird nun festgestellt, dass der Eingang der Steuervorrichtung den Zustand 0 aufweist, ist die Heizung/ der elektrische Verbraucher 10a in Ordnung. Bleibt der Eingang der Steuervorrichtung 4 auf "1", ist die Heizung/ der elektrische Verbraucher 10a hochohmig.

### BEZUGSZEICHENLISTE

- 1: Haushaltsgeschirrspülmaschine
- 2: Spülbehälter
- 3: Geschirrkörbe
- 4: Steuervorrichtung
- 5: oberer Sprüharm
- 6: unteren Sprüharm
- 7: Umwälzpumpe
- 8, 9: Flüssigkeitszuleitung
- 10: Durchlauferhitzer
- 10a: elektrischer Verbraucher
- 11: Eingangsstutzen
- 12, 13: Ausgangsstutzen
- 14: Wasserweiche
- 15: erster Schalter
- 16: erster Schalter
- 17: elektrische Schaltung
- 18: Spannungsteiler
- a, b: Schaltzustand
- K1-K4: Knoten
- L: Außenleiter
- N: Neutralleiter
- R1-R5: Widerstand
- U: Versorgungsspannung
- U_{dc}: Gleichspannung

## Patentansprüche

1. Haushaltsgerät, insbesondere Geschirrspülmaschine, Waschmaschine, oder Wäschetrocknermaschine, mit einer Steuervorrichtung (4), mindestens einer Serienschaltung, die einen mittels der Steuervorrichtung (4) steuerbaren ersten Schalter (15), einen mittels der Steuervorrichtung (4) steuerbaren zweiten Schalter (16) und einen zwischen den beiden Schaltern (15, 16) angeordneten elektrischen Verbraucher (10a) aufweist, der mittels der beiden Schalter (15, 16) allpolig von einem eine Versorgungsspannung (U) für das Haushaltsgerät (1) bereitstellenden, elektrischen Versorgungsnetz trennbar ist, und mit einer zum Überprüfen der Funktionstüchtigkeit des elektrischen Verbrauchers (10a) vorgesehenen Schaltungsanordnung, wobei die Schaltungsanordnung einen parallel zu der Serienschaltung geschalteten, mindestens einen ersten und mindestens einen zweiten Widerstand (R1; R2, R3) aufweisenden Spannungsteiler (18) umfasst, dessen erster Widerstand (R1) parallel zum ersten Schalter (15) derart geschaltet ist, dass der erste Schalter (15) in seinem geschlossenen Zustand den ersten Widerstand (R1) im Wesentlichen überbrückt, wobei von der Steuervorrichtung (4) zur Überprüfung der Funktionstüchtigkeit des elektrischen Verbrauchers (10a)eine elektrische Spannung des Spannungsteilers (18) oder eine dieser elektrischen Spannung des Spannungsteilers (18) zugeordnete elektrische Spannung zur Auswertung herangezogen ist, wobei die Steuervorrichtung (4) eingerichtet ist, aufgrund einer Auswertung der elektrischen Spannung des Spannungsteilers (18) oder der dieser elektrischen Spannung zugeordneten elektrischen Spannung bei geöffneten Schaltern (15, 16) einen Erdschluss des elektrischen Verbrauchers (10a) zu erkennen, den zweiten Schalter (16) nur dann zu schließen, wenn aufgrund der Auswertung kein Erdschluss des elektrischen Verbrauchers (10a) erkannt wurde, aufgrund einer Auswertung der elektrischen Spannung des Spannungsteilers (18) oder der dieser elektrischen Spannung zugeordneten elektrischen Spannung bei geöffnetem ersten Schalter (15) und bei geschlossenem zweiten Schalter (16) eine Unterbrechung des elektrischen Verbrauchers (10a) zu erkennen, und den ersten Schalter (15) nur dann zu schließen, wenn aufgrund der Auswertung keine Unterbrechung des elektrischen Verbrauchers (10a) erkannt wurde, wobei dem zweiten Schalter (16) eine eigene Funktionsüberprüfungsvorrichtung zugeordnet ist, die eine elektrische Spannungsquelle (U_{dc}) und einen zwischen dem zweiten Schalter (16) und der Spannungsquelle (U_{dc}) geschalteten, weiteren Widerstand (R4) aufweist, die nur im geöffneten Zustand des zweiten Schalters (16) über den zweiten Schalter (16) und diesen weiteren Widerstand (R4) mit einem Neutralleiter (N) des Haushaltsgerätes (1) verbunden ist, und wobei die Steuervorrichtung (4) eingerichtet ist, aufgrund der am weiteren Widerstand (R4) der Funktionsüberprüfungsvorrichtung anliegenden elektrischen Spannung zu erkennen, ob der zweite Schalter (16) von seinem geöffneten Zustand in seinen geschlossenen Zustand umgeschaltet ist.

2. Haushaltsgerät nach Anspruch 1, **dadurch gekennzeichnet, dass**
- die Schalter (15, 16) jeweils als von der Steuervorrichtung (4) steuerbare Relais ausgebildet sind,
- die Spannung des Spannungsteilers (18) an einem ersten Knoten (K1) anliegt, der mit den beiden Widerständen (R1; R2, R3) und dem ersten Schalter (15) verbunden ist,
- die Widerstandwerte der beiden Widerstände (R1, R2, R3) des Spannungsteilers (18) wesentlich größer als der Widerstandswert des elektrischen Verbrauchers (10a) sind oder zumindest der Widerstandswert des zweiten Widerstands (R2, R3) wesentlich größer als der Widerstandswert des elektrischen Verbrauchers (10a) ist, und/oder
- der Spannungsteiler (18) zwischen einem Außenleiter (L) und einem Neutralleiter (N) des Haushaltsgerätes (1) geschaltet ist.

3. Haushaltsgerät nach Anspruch 1 oder 2, **dadurch gekennzeichnet, dass** das Spannungsteilungsverhältnis des Spannungsteilers (18) 0,5 oder zumindest annähernd 0,5 beträgt.

4. Haushaltsgerät nach einem der Ansprüche 1 bis 3, **dadurch gekennzeichnet, dass** der zweite Widerstand als eine Serienschaltung von wenigstens zwei Widerständen (R2, R3) ausgebildet ist, die über einen zweiten Koten (K2) verbunden sind, und insbesondere die der elektrischen Spannung des Spannungsteilers (18) zugeordnete elektrischen Spannung am zweiten Knoten (K2) anliegt.

5. Haushaltsgerät nach einem der Ansprüche 1 bis 4, **dadurch gekennzeichnet, dass** bei geöffneten Schaltern (15, 16) die Steuervorrichtung (4) dann einen Erdschluss des elektrischen Verbrauchers (10a) erkennt, wenn die Spannung des Spannungsteilers (18) wesentlich von einem Spannungswert abweicht, der sich aufgrund des Spannungsteilungsverhältnisses des Spannungsteilers (18) und des Spannungswerts der vom Versorgungsnetz bereitgestellten und für den Betrieb des Haushaltsgerätes (1) vorgesehen Versorgungsspannung (U) ergibt.

6. Haushaltsgerät nach einem der Ansprüche 1 bis 5, **dadurch gekennzeichnet, dass** bei geöffnetem ersten Schalter (15) und bei geschlossenem zweiten Schalter (16) die Steuervorrichtung (4) dann eine Unterbrechung des elektrischen Verbrauchers (10a) erkennt, wenn die Spannung des Spannungsteilers (18) zumindest in etwa den Spannungswert aufweist, der sich aufgrund des Spannungsteilungsverhältnisses des Spannungsteilers (18) und des Spannungswerts der vom Versorgungsnetz bereit gestellten und für den Betrieb des Haushaltsgerätes (1) vorgesehen Versorgungsspannung (U) ergibt.

7. Verfahren zum Überprüfen der Funktionstüchtigkeit eines elektrischen Verbrauchers eines Haushaltsgerätes nach einem der Ansprüche 1 bis 6, aufweisend folgende Verfahrensschritte:
- Auswertung der elektrischen Spannung des Spannungsteilers (18) oder der dieser elektrischen Spannung zugeordneten elektrischen Spannung bei geöffneten Schaltern (15, 16), um einen Erdschluss des elektrischen Verbrauchers (10a) zu erkennen,
- Schließen des zweiten Schalter (16) nur dann, wenn aufgrund der Auswertung kein Erdschluss des Verbrauchers (10a) erkannt wurde,
- Auswerten der elektrischen Spannung des Spannungsteilers (18) oder der dieser elektrischen Spannung zugeordneten elektrischen Spannung bei geöffnetem ersten Schalter (15) und geschlossenem zweiten Schaler (16), um eine Unterbrechung des elektrischen Verbrauchers (10a) zu erkennen, und
- Schließen des ersten Schalters (15) nur dann, wenn aufgrund der Auswertung keine Unterbrechung des Verbrauchers (10a) erkannt wurde.
- Funktionsüberprüfen des zweiten Schalters (16) durch Erfassen und Auswerten mittels der Steuervorrichtung (4) einer elektrischen Spannung, die an einem weiteren Widerstand (R4) des Haushaltsgeräts (4) anliegt, der einerseits mit einer elektrischen Spannungsquelle (U_{dc}) des Haushaltsgeräts (1) verbunden ist und mittels des zweiten Schalters (16), wenn dieser sich in seinem geöffneten Zustand befindet, mit einem Neutralleiter (N) des Haushaltsgerätes (1) verbunden ist.

8. Verfahren nach Anspruch 7, **gekennzeichnet durch** Erkennen des Erdschlusses wenn die Spannung des Spannungsteilers (18) wesentlich von einem Spannungswert abweicht, der sich aufgrund des Spannungsteilungsverhältnisses des Spannungsteilers (18) und dem Spannungswert der von dem Versorgungsnetz bereitgestellten und für den Betrieb des Haushaltsgerätes (1) vorgesehenen Versorgungsspannung (U) ergibt.

9. Verfahren nach Anspruch 7 oder 8, **gekennzeichnet durch** Erkennen der elektrischen Unterbrechung des elektrischen Verbrauchers (10a) bei geöffnetem ersten Schalter (15) und bei geschlossenem zweiten Schalter (16), wenn die Spannung des Spannungsteilers (18) zumindest in etwa den Spannungswert aufweist, der sich aufgrund des Spannungsteilungsverhältnisses des Spannungsteilers (18) und dem Spannungswert der von dem Versorgungsnetz bereitgestellten und für den Betrieb des Haushaltsgerätes (1) vorgesehenen Versorgungsspannung (U) ergibt.

## Claims

1. Household appliance, in particular dishwasher, washing machine or tumble dryer, with a control apparatus (4), at least one series circuit, which has a first switch (15) that can be controlled by means of the control apparatus (4), a second switch (16) that can be controlled by means of the control apparatus (4) and an electrical consumer (10a) that is arranged between the two switches (15, 16) and by means of the two switches (15, 16) can be isolated at all poles from an electrical supply network that provides a supply voltage (U) for the household appliance (1), and with a circuit arrangement intended for reviewing the proper functionality of the electrical consumer (10a), wherein the circuit arrangement comprises a voltage divider (18), which is connected in parallel with the series circuit, has at least one first and at least one second resistor (R1; R2, R3) and of which the first resistor (R1) is connected in parallel with the first switch (15) in such a way that the first switch (15), in its closed state, substantially bridges the first resistor (R1), wherein the control apparatus (4), in order to review the proper functionality of the electrical consumer (10a), makes use of an electrical voltage of the voltage divider (18) or an electrical voltage assigned to said electrical voltage of the voltage divider (18) for evaluation, wherein the control apparatus (4) is configured, on the basis of an evaluation of the electrical voltage of the voltage divider (18) or the electrical voltage assigned to said electrical voltage, when the switches (15, 16) are open, to identify an earth fault of the electrical consumer (10a), to only close the second switch (16) when no earth fault of the electrical consumer (10a) has been identified on the basis of the evaluation, on the basis of an evaluation of the electrical voltage of the voltage divider (18) or the electrical voltage assigned to said electrical voltage, when the first switch (15) is open and when the second switch (16) is closed, to identify an interruption of the electrical consumer (10a), and to only close the first switch (15) when, on the basis of the evaluation, no interruption of the electrical consumer (10a) has been identified, wherein the second switch (16) is assigned its own functionality reviewing apparatus, which has an electrical voltage source (U_{dc}) and a further resistor (R4), which is connected between the second switch (16) and the voltage source (U_{dc}) and which, only in the opened state of the second switch (16), is connected to a neutral conductor (N) of the household appliance (1) via the second switch (16) and said further resistor (R4), and wherein the control apparatus (4) is configured, on the basis of the electrical voltage present at the further resistor (R4) of the functionality reviewing apparatus, to identify whether the second switch (16) has switched from its opened state into its closed state.

2. Household appliance according to claim 1, **characterised in that**
- the switches (15, 16) are in each case embodied as relays that can be controlled by the control apparatus (4),
- the voltage of the voltage divider (18) is present at a first node (K1), which is connected to the two resistors (R1; R2, R3) and the first switch (15),
- the resistance values of the two resistors (R1, R2, R3) of the voltage divider (18) are significantly greater than the resistance value of the electrical consumer (10a) or at least the resistance value of the second resistor (R2, R3) is significantly greater than the resistance value of the electrical consumer (10a), and/or
- the voltage divider (18) is connected between a line conductor (L) and a neutral conductor (N) of the household appliance (1).

3. Household appliance according to claim 1 or 2, **characterised in that** the voltage division ratio of the voltage divider (18) amounts to 0.5 or at least approximately 0.5.

4. Household appliance according to one of claims 1 to 3, **characterised in that** the second resistor is embodied as a series circuit consisting of at least two resistors (R2, R3), which are connected via a second node (K2), and in particular the electrical voltage assigned to the electrical voltage of the voltage divider (18) is present at the second node (K2).

5. Household appliance according to one of claims 1 to 4, **characterised in that**, when the switches (15, 16) are open, the control apparatus (4) then identifies an earth fault of the electrical consumer (10a) when the voltage of the voltage divider (18) deviates significantly from a voltage value that is produced on the basis of the voltage division ratio of the voltage divider (18) and the voltage value of the supply voltage (U) provided by the supply network and intended for the operation of the household appliance (1).

6. Household appliance according to one of claims 1 to 5, **characterised in that**, when the first switch (15) is open and when the second switch (16) is closed, the control apparatus (4) then identifies an interruption of the electrical consumer (10a) when the voltage of the voltage divider (18) at least approximately has the voltage value that is produced on the basis of the voltage division ratio of the voltage divider (18) and the voltage value of the supply voltage (U) provided by the supply network and intended for the operation of the household appliance (1).

7. Method for reviewing the proper functionality of an electrical consumer of a household appliance according to one of claims 1 to 6, having the following method steps:
- evaluation of the electrical voltage of the voltage divider (18) or the electrical voltage assigned to said electrical voltage when the switches (15, 16) are open, in order to identify an earth fault of the electrical consumer (10a),
- only closing the second switch (16) when no earth fault of the consumer (10a) has been identified on the basis of the evaluation,
- evaluating the electrical voltage of the voltage divider (18) or the electrical voltage assigned to said electrical voltage when the first switch (15) is open and the second switch (16) is closed, in order to identify an interruption of the electrical consumer (10a), and
- only closing the first switch (15) when no interruption of the consumer (10a) has been identified on the basis of the evaluation,
- reviewing the functionality of the second switch (16) by detecting and evaluating, by means of the control apparatus (4), an electrical voltage which is present at a further resistor (R4) of the household appliance (4), which further resistor is connected on one side to an electrical voltage source (Udc) of the household appliance (1) and is connected to a neutral conductor (N) of the household appliance (1) by means of the second switch (16), when said second switch is in its open state.

8. Method according to claim 7, **characterised by** identifying the earth fault when the voltage of the voltage divider (18) deviates significantly from a voltage value that is produced on the basis of the voltage division ratio of the voltage divider (18) and the voltage value of the supply voltage (U) provided by the supply network and intended for the operation of the household appliance (1).

9. Method according to claim 7 or 8, **characterised by** identifying the electrical interruption of the electrical consumer (10a), when the first switch (15) is open and when the second switch (16) is closed, when the voltage of the voltage divider (18) at least approximately has the voltage value that is produced on the basis of the voltage division ratio of the voltage divider (18) and the voltage value of the supply voltage (U) provided by the supply network and intended for the operation of the household appliance (1).

## Revendications

1. Appareil ménager, notamment lave-vaisselle, lave-linge ou sèche-linge, comprenant un dispositif de commande (4), au moins un circuit en série qui présente un premier commutateur (15) commandable au moyen du dispositif de commande (4), un deuxième commutateur (16) commandable au moyen du dispositif de commande (4), et un consommateur électrique (10a) disposé entre les deux commutateurs (15, 16), lequel peut être coupé d'un réseau d'alimentation électrique fournissant une tension d'alimentation (U) pour l'appareil ménager (1), sur tous les pôles au moyen des deux commutateurs (15, 16), et comprenant un agencement de circuit ménagé pour vérifier la fonctionnalité du consommateur électrique (10a), dans lequel l'agencement de circuit comprend un diviseur de tension (18) connecté en parallèle au circuit en série, présentant au moins une première et au moins une deuxième résistances (R1 ; R2, R3), dont la première résistance (R1) est connectée parallèlement au premier commutateur (15) de manière à ce que le premier commutateur (15), dans son état fermé, ponte essentiellement la première résistance (R1), dans lequel, pour vérifier la fonctionnalité du consommateur électrique (10a), une tension électrique du diviseur de tension (18) ou une tension électrique associée à cette tension électrique du diviseur de tension (18) est prise en compte par le dispositif de commande (4) pour l'évaluation, dans lequel le dispositif de commande (4) est configuré pour identifier un défaut de terre du consommateur électrique (10a) en raison d'une évaluation de la tension électrique du diviseur de tension (18) ou de la tension électrique associée à cette tension électrique lorsque les commutateurs (15, 16) sont ouverts, pour fermer le deuxième commutateur (16) seulement si, en raison de l'évaluation, aucun défaut de terre du consommateur électrique (10a) n'a été identifié, pour identifier une interruption du consommateur électrique (10a) en raison d'une évaluation de la tension électrique du diviseur de tension (18) ou de la tension électrique associée à cette tension électrique lorsque le premier commutateur (15) est ouvert et le deuxième commutateur (16) est fermé, et pour fermer le premier commutateur (15) seulement si, en raison de l'évaluation, aucune interruption du consommateur électrique (10a) n'a été identifiée, dans lequel un propre dispositif de contrôle de fonctionnement est associé au deuxième commutateur (16), lequel présente une source de tension électrique (U_{dc}) et une résistance supplémentaire (R4) commutée entre le premier commutateur (16) et la source de tension (U_{dc}), lequel est relié à un conducteur neutre (N) de l'appareil ménager (1) par l'intermédiaire du deuxième commutateur (16) et de cette résistance supplémentaire (R4), seulement à l'état ouvert du deuxième commutateur (16), et dans lequel le dispositif de commande (4) est configuré pour identifier, en raison de la tension électrique présente sur la résistance supplémentaire (R4) du dispositif de contrôle de fonctionnement, si le deuxième commutateur (16) est commuté de son état ouvert en son état fermé.

2. Appareil ménager selon la revendication 1, **caractérisé en ce que**
- les commutateurs (15, 16) sont respectivement réalisés comme relais commandables par le dispositif de commande (4),
- la tension du diviseur de tension (18) est présente sur un premier nœud (K1) qui est relié aux deux résistances (R1 ; R2, R3) et au premier commutateur (15),
- les valeurs de résistance des deux résistances (R1, R2, R3) du diviseur de tension (18) sont nettement supérieures à la valeur de résistance du consommateur électrique (10a), ou **en ce qu'**au moins la valeur de résistance de la deuxième résistance (R2, R3) est nettement supérieure à la valeur de résistance du consommateur électrique (10a), et/ou **en ce que**
- le diviseur de tension (18) est commuté entre un conducteur externe (L) et un conducteur neutre (N) de l'appareil ménager (1).

3. Appareil ménager selon la revendication 1 ou 2, **caractérisé en ce que** le rapport de division de tension du diviseur de tension (18) est de 0,5 ou au moins approximativement 0,5.

4. Appareil ménager selon l'une quelconque des revendications 1 à 3, **caractérisé en ce que** la deuxième résistance est réalisée en tant qu'un circuit en série d'au moins deux résistances (R2, R3) qui sont reliées par l'intermédiaire d'un deuxième nœud (K2), et **en ce que** notamment la tension électrique associée à la tension électrique du diviseur de tension (18) est présente sur le deuxième nœud (K2).

5. Appareil ménager selon l'une quelconque des revendications 1 à 4, **caractérisé en ce que**, lorsque les commutateurs sont ouverts (15, 16), le dispositif de commande (4) identifie un défaut de terre du consommateur électrique (10a) lorsque la tension du diviseur de tension (18) diffère essentiellement d'une valeur de tension qui résulte en raison du rapport de division de tension du diviseur de tension (18) et de la valeur de tension de la tension d'alimentation (U) fournie par le réseau d'alimentation et ménagée pour le fonctionnement de l'appareil ménager (1).

6. Appareil ménager selon l'une quelconque des revendications 1 à 5, **caractérisé en ce que**, lorsque le premier commutateur est ouvert (15) et le deuxième commutateur (16) est fermé, le dispositif de commande (4) identifie une interruption du consommateur électrique (10a) lorsque la tension du diviseur de tension (18) présente au moins environ la valeur de tension qui résulte en raison du rapport de division de tension du diviseur de tension (18) et de la valeur de tension de la tension d'alimentation (U) fournie par le réseau d'alimentation et ménagée pour le fonctionnement de l'appareil ménager (1).

7. Procédé de vérification de la fonctionnalité d'un consommateur électrique d'un appareil ménager selon l'une quelconque des revendications 1 à 6, présentant les étapes de procédé suivantes :
- évaluation de la tension électrique du diviseur de tension (18) ou de la tension électrique associée à cette tension électrique, lorsque les commutateurs (15, 16) sont ouverts, afin d'identifier un défaut de terre du consommateur électrique (10a),
- fermeture du deuxième commutateur (16) seulement si, en raison de l'évaluation, aucun défaut de terre du consommateur (10a) n'a été identifié,
- évaluation de la tension électrique du diviseur de tension (18) ou de la tension électrique associée à cette tension électrique, lorsque le premier commutateur (15) est ouvert et le deuxième commutateur (16) est fermé, afin d'identifier une interruption du consommateur électrique (10a), et
- fermeture du premier commutateur (15) seulement si, en raison de l'évaluation, aucune interruption du consommateur (10a) n'a été identifiée,
- vérification du fonctionnement du deuxième commutateur (16) au moyen du dispositif de commande (4) par détection et évaluation d'une tension électrique qui est présente sur une résistance supplémentaire (R4) de l'appareil ménager (4), qui est d'une part reliée à une source de tension électrique (U_{dc}) de l'appareil ménager (1) et, au moyen du deuxième commutateur (16) lorsque celui-ci se trouve dans son état ouvert, à un conducteur neutre (N) de l'appareil ménager (1).

8. Procédé selon la revendication 7, **caractérisé par** l'identification du défaut de terre lorsque la tension du diviseur de tension (18) diffère essentiellement d'une valeur de tension qui résulte en raison du rapport de division de tension du diviseur de tension (18) et de la valeur de tension de la tension d'alimentation (U) fournie par le réseau d'alimentation et ménagée pour le fonctionnement de l'appareil ménager (1).

9. Procédé selon la revendication 7 ou 8, **caractérisé par** l'identification de l'interruption électrique du consommateur électrique (10a) lorsque le premier commutateur (15) est ouvert et le deuxième commutateur (16) est fermé, lorsque la tension du diviseur de tension (18) présente au moins environ la valeur de tension qui résulte en raison du rapport de division de tension du diviseur de tension (18) et de la valeur de tension de la tension d'alimentation (U) fournie par le réseau d'alimentation et ménagée pour le fonctionnement de l'appareil ménager (1).
